# EUROPÄISCHE PATENTANMELDUNG

(11) **EP 0 897 820 A2**
(43) Veröffentlichungstag der Anmeldung: **24.02.1999**
(21) Anmeldenummer: 98112944.8
(22) Anmeldetag: 13.07.1998
(51) Int. Cl.: B60J 7/06

(54) **Rolldach eines Personenkraftwagens**

(30) Priorität: 20.08.1997 DE 19736024
(71) Anmelder: Bayerische Motoren Werke Aktiengesellschaft, 80788 München (DE)
(72) Erfinder: Minatti, Johann, 80935 München (DE); Clausen-Schaumann, Andreas, 82347 Bernried (DE)

(57) **Zusammenfassung**

Die Erfindung betrifft ein Rolldach eines Fahrzeuges, insbesondere eines Personenkraftwagens, mit mehreren quer zur Fahrzeuglängsachse (1a) ausgerichteten, mit ihren freien Enden in Schienen (4) geführten Lamellen (2), die um eine sich in Lamellen-Längsrichtung erstreckende Scharnierlienie (7) gegeneinander verschwenkbar sind, um das Rolldach ausgehend von einer Position, in der es eine vom Dachrahmen des Fahrzeuges begrenzte Fahrzeug-Dachöffnung abdeckt, durch Aufrollen der Lamellen (2) auf eine bezüglich der Dachöffnung in Richtung der Fahrzeuglängsachse (1a) endseitig vorgesehene Rolle (9) in eine die Fahrzeug-Dachöffnung zumindest teilweise freigebende Position bringen zu können. Erfindungsgemäß sind die Lamellen (2) endseitig mit Abschlußkappen (5) versehen und über diese in den mit dem Dachrahmen verbundenen, in Richtung der Fahrzeuglängsachse (1a) verlaufenden Schienen (4) geführt, während sie im zwischen den Abschlußkappen (5) liegenden Abschnitt (2a) durch elastisch verformbare Verbindungselemente (3) miteinander verbunden sind.

## Beschreibung

Die Erfindung betrifft ein Rolldach eines Fahrzeuges, insbesondere eines Personenkraftwagens, mit mehreren quer zur Fahrzeuglängsachse ausgerichteten, mit ihren freien Enden in Schienen geführten Lamellen, die um eine sich in Lamellen-Längsrichtung erstreckende Scharnierlinie gegeneinander verschwenkbar sind, um das Rolldach ausgehend von einer Position, in der es eine vom Dachrahmen des Fahrzeuges begrenzte Fahrzeug-Dachöffnung abdeckt, durch Aufrollen der Lamellen auf eine bezüglich der Dachöffnung in Richtung der Fahrzeuglängsachse endseitig vorgesehene Rolle in eine die Fahrzeug-Dachöffnung zumindest teilweise freigebende Position bringen zu können.

### [Stand der Technik]

Zum technischen Umfeld wird neben der US 1 710 874 insbesondere auf die DE 34 20 641 A1 verwiesen.

Wie die eben genannten Veröffentlichungen belegen, sind Rolldächer für Fahrzeuge in unterschiedlichen Ausführungsformen bekannt geworden, haben sich jedoch insbesondere an Personenkraftwagen bis heute noch nicht durchgesetzt. Vielmehr sind neben Schiebedächern mit einem starren Deckelteil im wesentlichen nur die sog. Stoff-Faltdächer realisiert. Ein Grund hierfür mag die Geräuschbelastung sein, die sich bei den bislang bekannten Rolldach-Konstruktionen im geöffneten Zustand einstellt. Es wurde bislang aber auch noch kein tragbarer Kompromiß zwischen den Leichtbau-Anforderungen einerseits und den Stabilitätsanforderungen andererseits - jeweils bezogen auf das Rolldach - gefunden.

### [Aufgabe der Erfindung]

Ein im Hinblick hierauf verbessertes Fahrzeug-Rolldach nach dem Oberbegriff des Anspruchs 1 aufzuzeigen, ist daher Aufgabe der vorliegenden Erfindung.
Die Lösung dieser Aufgabe ist dadurch gekennzeichnet, daß die Lamellen endseitig mit Abschlußkappen versehen und über diese in den mit dem Dachrahmen verbundenen, in Richtung der Fahrzeuglängsachse verlaufenden Schienen geführt sind, während sie im zwischen den Abschlußkappen liegenden Abschnitt durch elastisch verformbare Verbindungselemente miteinander verbunden sind. Vorteilhafte Aus- und Weiterbildungen sind Inhalt der Unteransprüche.

### [Beispiele]

Näher erläutert wird die Erfindung anhand mehrerer lediglich prinzipiell dargestellter bevorzugter Ausführungsbeispiele. Es zeigt:
Fig. 1 die Teil-Aufsicht auf ein Rolldach eines Personenkraftwagens,
Fig. 2 den Schnitt A-A aus Fig. 1,
Fig. 3 den Schnitt B-B aus Fig. 1 für ein erstes Ausführungsbeispiel,
Fig. 4 eine dem Schnitt B-B entsprechende Darstellung für ein zweites Ausführungsbeispiel der Erfindung,
Fig. 5 eine solche Darstellung eines dritten Ausführungsbeispieles,
Fig. 6 ein viertes Ausführungsbeispiel, sowie
Fig. 7 noch ein Ausführungsbeispiel in der dem Schnitt B-B in Fig. 1 entsprechenden Darstellung.

Mit der Bezugsziffer 1a ist die Fahrzeuglängsachse eines nicht dargestellten Personenkraftwagens bezeichnet, in dessen Dach (wie bei Schiebedächern oder Stoff-Faltdächern üblich) eine Dachöffnung vorgesehen ist, die hier jedoch von einem Rolldach abgedeckt wird. Dieses Rolldach besteht aus einer Vielzahl von in Richtung der Fahrzeuglängsachse 1 hintereinander angeordneten Lamellen 2, die durch später noch näher erläuterte Verbindungselemente 3 miteinander verbunden sind. Diese Lamellen 2 und die dazwischen liegenden Verbindungselemente 3 erstrecken sich in Richtung der Fahrzeug-Querachse 1b, d.h. die Längsrichtung der Lamellen 2 verläuft quer zur Fahrzeug-Längsachse 1a.

Soll die Dachöffnung des Personenkraftwagens freigelegt werden, so wird das Rolldach in Richtung der Fahrzeug-Längsachse 1a verschoben und hierbei auf eine bezüglich der Dachöffnung endseitig vorgesehene Rolle 9 aufgewickelt bzw. aufgerollt. Die Rotationsachse dieser Rolle 9 erstreckt sich dabei sinnvollerweise in Richtung der Fahrzeug-Querachse 1b. Deckt das Rolldach die Dachöffnung ab, so sind die Lamellen 2 endseitig, d.h. mit ihren freien Enden in Schienen 4, welche in Richtung der Fahrzeug-Längsachse 1a verlaufen, geführt. Diese Schienen 4 enden dabei kurz vor der Rolle 9.

In den Schienen 4 geführt sind die Lamellen 2 durch sog. Abschlußkappen 5, die jeweils endseitig auf die Lamellen 3 aufgebracht sind. Die Verbindungselemente 3 befinden sich dabei nur in dem zwischen den Abschlußkappen 5 liegenden Abschnitt 2a der Lamellen 2.
Dabei sind die Abschlußkappen 5 in senkrechter Richtung 6 (vgl. Fig 2) zum Rolldach betrachtet höher als der zwischen den Abschlußkappen 5 liegende Abschnitt 2a einer Lamelle 2 inklusive des zugehörigen Verbindungselementes 3. Hierdurch ist gewährleistet, daß die Lamellen 2 sowie die Verbindungselemente 3 beim Aufwickeln auf die Rolle 9 nicht aufeinander zum Liegen kommen, wodurch die Verschmutzungsgefahr insbesondere der dem Fahrzeug-Innenraum zugewandten Seite des Rolldaches deutlich herabgesetzt wird.
Wie bereits erwähnt sind die einzelnen Lamellen 2 miteinander über sog. Verbindungselemente 3 verbunden. Diese Verbindungselemente 3 sind elastisch verformbar, u.a. um ein Aufrollen des Rolldaches auf der Rolle 9 überhaupt zu ermöglichen, aber auch um das Rolldach in gekrümmt verlaufenden Schienen 4 führen zu können. Die Lamellen 2 selbst sind nämlich - zumindest in Richtung der Fahrzeuglängsachse 1a betrachtet - relativ biegesteif, bestehen aus einem quasi festen Werkstoff (hierauf wird später noch näher eingegangen) und besitzen jeweils eine Breite (gemessen in Richtung der Fahrzeuglängsachse 1a) von nur wenigen Zentimetern. Demgegenüber noch schmäler sind im übrigen die Verbindungselemente 3.

Nachdem die Verbindungselemente 3 elastsich verformbar sind, wirken sie somit als Gelenk, so daß die einzelnen Lamellen 2 um eine in Längsrichtung der Verbindungselemente 3 verlaufende Scharnierlinie 7- diese ist parallel zur Fahrzeug-Querachse 1b - gegeneinander verschwenkbar sind. Die Verbindungselemente 3 und/oder die Lamellen 2 können dabei so gestaltet sein, daß ein Verschwenken der Lamellen 2 gegeneinander nur in einer Richtung möglich ist, nämlich in derjenigen Richtung, in der die Lamellen 2 beim Aufrollen auf die Rolle 9 gegeneinander verschwenkt werden. Es ist jedoch auch möglich, durch entsprechende Gestaltung ein Verschwenken der Lamellen 2 um die Scharnierlinie7 gegeneinander in beiden möglichen Richtungen zuzulassen, wenngleich dies aus funktionalen Gründen nicht erforderlich ist.
Eine wesentliche Funktion der Verbindungselemente 3 ist es jedoch, die Dichtheit des Rolldaches sicherzustellen. Hierfür müssen die Verbindungselemente 3 geeignet gestaltet und insbesonder auch auf geeignete Weise mit den Lamellen 2 verbunden sein, was später noch näher erläutert wird.

Es können jedoch nicht nur die elastisch verformbaren Verbindungselemente 3, sondern zusätzlich die Abschlußkappen 5 Gelenke bezüglich der Lamellen 2 im Hinblick auf deren Verschwenken um die oben genannte Scharnierlinie 7 bilden. Insbesondere können die Abschlußkappen 5 derart geformt sein, daß sie nur unter Druckbelastung zwischen einander benachbarten Lamellen 2 als Gelenke wirken. Hierzu können die einander zugewandten Stirnseiten 5a der Abschlußkappen 5 zweier benachbarter Lamellen - wie Fig. 2 zeigt - im wesentlichen halbkreisförmig konkav bzw. konvex geformt sein und unter Druckbelastung aneinander anliegen. Bei Zugbelastung hingegen können die Abschlußkappen 5 zweier benachbarter Lamellen 2 durchaus geringfügig voneinander beabstandet sein.

Die Abschlußkappen 5 führen somit nicht nur das Rolldach bzw. dessen einzelne Lamellen 2 in den Schienen 4, sondern halten dieses Rolldach zugleich drehgelenkig um die bzw in den Scharnierlinien 7, so daß das gesamte Rolldach - auch aufgrund der oben bereits erläuterten mechanischen Eigenschaften der Lamellen 2 - in Richtung der Fahrzeug-Längsachse 1a eine höhere Elastizität aufweist, als in Richtung der Fahrzeug-Querachse 1b.

Was nun die elastsich verformbaren Verbindungselemente 3 der einzelnen Lamellen 2 betrifft, so können diese unterschiedlich ausgebildet sein.

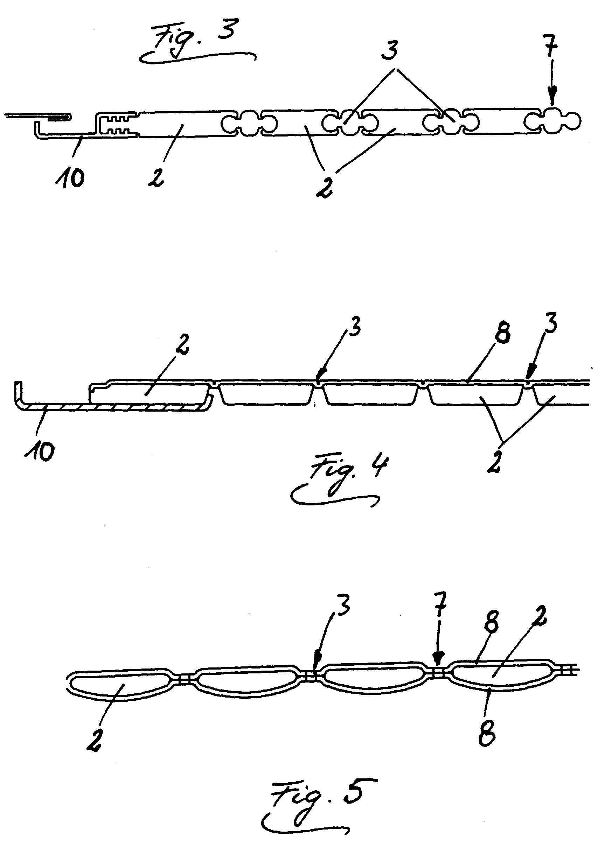

Ein erstes Ausführungsbeispiel zeigt Fig. 3. Demnach sind die Verbindungselemente 3 als geeignet geformte Formteile ausgebildet, die formschlüssig mit den benachbarten Lamellen 2 verbunden sind. Dabei kann - wie bei der hier gezeigten Ausführungsform, bei welcher die formschlüssige Verbindung wie bei den einzelnen Elementen eines Puzzles gestaltet ist - die formschlüssige Verbindung zwischen Lamelle 2 und Formteil/Verbindungselement 3 zumindest geringfügig gelenkig ausgebildet sein.

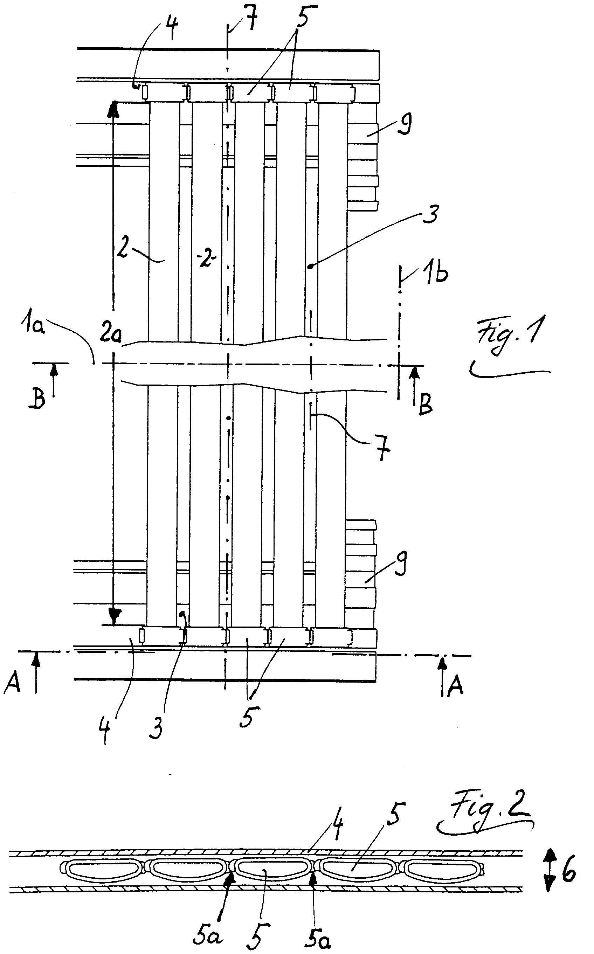

Fig. 4 zeigt eine dem Schnitt B-B in Fig.1 entsprechende Darstellung für ein zweites Ausführungsbeispiel der Erfindung. Demnach sind die Verbindungselemente 3 zumindest bezüglich einer Mehrzahl der Lamellen 2 durch eine diese Lamellen 2 oberflächenseitig abdeckende und mit diesen verbundene Haut 8 gebildet. Hier stellt diese Haut 8 gleichzeitig die gesamte Außenhaut des Rolldaches dar und kann durch ein geeignetes Stoffgewebe oder eine flexible Folie gebildet sein. Die zwischen jeweils zwei Lamellen 2 liegenden Abschnitte der Haut 8 stellen dabei die erfindungsgemäßen sog. Verbindungselemente 3 dar. In diesem Zusammenhang sei darauf hingewiesen, daß sich die Haut 8 in Fahrzeug-Querrichtung 1b im wesentlichen auch nur über die zwischen den Abschlußkappen 5 liegenden Abschnitte 2a der Lamellen 2 erstreckt, so daß die Haut 8 somit im wesentlichen nicht in die seitlichen Schienen 4 des Rolldaches hineinragt. Vielmehr liegt der entsprechende Rand der Haut 8 bündig an der Innenkante jedes Abschlußkappe 5 an.

Verbunden werden kann die Haut 8 mit der Oberfläche der Lamellen 2 auf verschiedene Weise, jedoch bietet sich bei der hier gezeigten Gestaltung insbesondere eine Klebeverbindung an.
Dabei kann - wie dargestellt - die Haut 8 zumindest im nicht aufgerollten Zustand des Rolldaches in den Raum zwischen einander benachbarten Lamellen 2 hineinragen, wobei dieses sozusagen 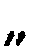 überschüssige" Material von Haut 8 beim Aufwickeln des Rolldaches auf der bereits mehrfach erwähnten Rolle 9 gespannt und somit benötigt wird.

Ein drittes Ausführungsbeispiel zeigt Fig. 5. Hier ist auf die bezüglich des Fahrzeugdaches innere und äußere Oberfläche der Lamellen 2 jeweils eine Haut 8 aufgebracht ist, wobei die beiden Häute 8 im Bereich der Verbindungselemente 3 miteinander verbunden sind. Die letzgenannte Verbindung kann dabei in Form von Quernähten ausgebildet sein, die längs der Scharnierlienie 7 verlaufen. Zwischen diesen Quernähten 7 werden somit von den beiden Häuten 8 sog. Taschen gebildet, in welche die Lamellen 2 eingesteckt sind.

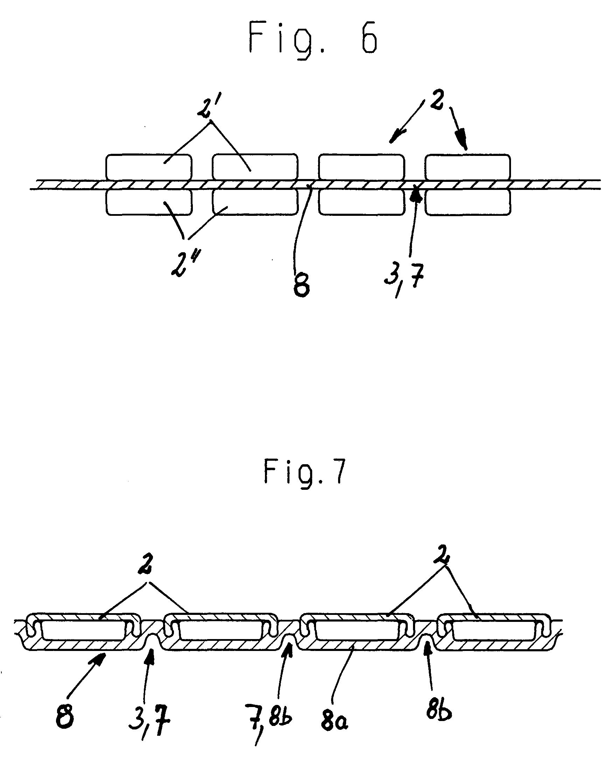

Fig. 6 zeigt eine dem Schnitt B-B in Fig.1 entsprechende Darstellung für ein viertes Ausführungsbeispiel der Erfindung. Demnach sind die Lamellen 2 zweiteilig ausgebildet und durch eine zwischen dem bezüglich des Fahrzeugdaches äußeren Lamellenteil 2' und dem bezüglich des Fahrzeugdaches inneren Lamellenteil 2'' vorgesehene, zumindest die Mehrzahl der Lamellen 2 erfassende Haut 8 miteinander verbunden, wobei der zwischen zwei benachbarten Lamellen 2 liegende Hautabschnitt wiederrum das Verbindungselement 3 bildet. Dabei können die Lamellenteile 2', 2'' wieder mit der Haut 8 verklebt sein.

Nach einem weiteren Ausführungsbeispiel gemäß Fig. 7 ist die Haut 8 als elastisch verformbares, in sich zusammmenhängendes flächiges Formteil 8a ausgebildet, dessen zwischen den Lamellen 2 und somit im Bereich der Scharnierlinien 7 liegenden und somit die Verbindungselemente 3 bildenden Abschnitte eine scharnierartige Einbuchtung 8b aufweisen. Selbstverständlich ist dieses flächige Formteil 8a, welches auch als durchgängiger Träger für die Lamellen 2 bezeichnet werden kann, wieder ausreichend elastisch, um das Rolldach einerseits in gekrümmt verlaufenden Schienen 4 führen zu können und insbesondere auch auf die bereits mehrfach erwähnte Rolle 9 aufwickeln zu können. Dabei kann - wie gezeigt - die Einbuchtung 8b mit einer Querschnittsverringerung des Formteiles 8a einhergehen, alternativ ist jedoch auch ein querschnittskonstante Gestaltung wie in Fig. 4 möglich.
In Fig. 7 ist im übrigen eine andere Variante für die Verbindung zwischen der Haut 8 und den Lamellen 2 gezeigt, nämlich in Form einer formschlüssigen Verbindung. Clipsartig sind dabei die Lamellen 2 in geeignete Aufnahmen im Formteil 8a eingesteckt.

Es wurde bereits erwähnt, daß - und dies sowie die folgenden Erläuterungen betrifft sämtliche genannten Ausführungsbeispiele - die Lamellen 2 zumindest in Richtung der Fahrzeuglängsachse 1a betrachtet relativ biegesteif sind und aus einem quasi festen Werkstoff bestehen. Es kann jedoch erwünscht sein, dem Rolldach zumindest im teilweise geschlossenen Zustand eine gewisse Wölbung in Richtung der Fahrzeug-Querachse 1b betrachtet aufzuprägen, so wie übliche Dächer von Personenkraftwagen ebenfalls in dieser Richtung gewölbt sind. Hierzu kann die Mehrzahl der Lamellen 2 zumindest in Richtung der Fahrzeug-Querachse 1b elastisch verformbar sein und ohne zusätzliche Krafteinwirkung quer zur Fahrzeuglängsachse 1a im wesentlichen geradlinig gestreckt verlaufen, durch zusätzliche Krafteinwirkung einer nicht gezeigten Spannvorrichtung jedoch angepaßt an die Wölbung des Fahrzeugdaches krümmbar sein. Ist das Rolldach stationär zumindest teilweise geschlossen, d.h. deckt es die Dachöffnung des Fahrzeuges zumindest teilweise ab, so kann unter Einfluß der Spannvorrichtung das Rolldach in seiner Gesamtheit bzw. es können die einzelnen Lamellen 2 quer zur Fahrzeug-Längsachse 1a gewölbt werden bzw. gewölbt sein, während für das Aufwikkeln des Rolldaches auf die Rolle 9 diese Wölbung aufgehoben wird. Nachdem die Lamellen 2 im auf die Rolle 9 aufgewickelten Zustand somit geradlinig gestreckt sind, wird der sich beim Aufrollen ergebende Durchmesser der Rolle 9 so gering als möglich gehalten.

In diesem Zusammmenhang ist es auch möglich, zumindest die bei abgedeckter Dachöffnung am weitesten von der Rolle 9 entfernte Lamelle 2 in sich starr auszubilden und mit einer quer zur Fahrzeuglängsachse 1a gekrümmten Form zu versehen, wobei diese Krümmung an diejenige des Dachrahmens in diesem Bereich angepaßt ist. Auf diese Weise ist sichergestellt, daß beim Schließen des Rolldaches die Anschlußpaßgenauigkeit zur Wölbung des Dachrahmens hergestellt ist. Ferner ist hierdurch im geöffneten Zustand des Rolldaches während der Fahrt des Fahrzeuges sichergestellt, daß durch Fahrtwindanregungen keine unerwünschten Schwingungen am Rolldach-System auftreten.

Was nun die für das erfindungsgemäße Fahrzeug-Rolldach verwendbaren bzw. geeigneten Materialien betrifft, so können die Lamellen aus unterschiedlichen natürlichen Werkstoffen wie z.B. Aluminium (bevorzugt als Strangpreßprofil), Stahl oder Holz bestehen, aber auch aus Kunststoffen oder hybriden Werkstoffen. Die Oberfläche der Lamellen 2 kann eloxiert, lackiert oder furniert sein oder in jeglicher anderen Form durch Beschichtung oder Strukturierung wie jeweils gewünscht aufgebracht werden.
Die Lamellen 2 können aber auch aus durchsichtigem Material bestehen, so bspw. aus Glas oder Plexiglas. Selbstverständlich sollte dann, wenn die Verbindungselemente 3 durch die beschriebene Haut 8 gebildet werden, diese Haut 8 ebenfalls durchsichtig, also bspw. eine transparente Folie sein. Ansonsten kommen für die Haut 8 - wie bereits erwähnt - unterschiedliche Gewebe oder Kunststoff-Folien als Material in Betracht, ebenso wie die Verbindungselemente 3 allgemein aus geeigneten elastomeren Materialien gefertigt sein können.

Fig. 4 zeigt als weiteres Detail eines erfindungsgemäßen Fahrzeug-Rolldaches an der Stirnseite der bei abgedeckter Dachöffnung am weitesten von der Rolle 9 entfernten Lamelle 2 eine sich quer zur Fahrzeuglängsachse 1a erstreckende Wasserrinne 10, die durch ein an der Unterseite dieser Lamelle 2 befestigtes Extrusionsprofil gebildet sein kann.

Schließlich kann der im die Dachöffnung abdeckenden Zustand der Rolle 9 am nächsten liegende Bereich eines erfindungsgemäßen Rolldaches zwischen der Abschlußkante der Dachöffnung und der Rolle 9 - also außerhalb der eigentlichen Dachöffnung - auch nur aus den seitlichen druckstabilen Abschlußkappen 5 oder auch nur aus in Fahrzeuglängsrichtung 1a verlaufenden Spanngurten bestehen, wenn die Rolle 9 zum Aufwickeln des Rolldaches bspw. durch eine Torsionsfeder in Aufrollrichtung vorgespannt ist. Jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### [Bezugszeichenliste]

- 1a: Fahrzeug-Längsachse
- 1b: Fahrzeug-Querachse
- 2: Lamelle
- 2a: Abschnitt von 2 zwischen 5
- 2': äußeres Lamellenteil
- 2'': inneres Lamellenteil
- 3: Verbindungselement
- 4: Schiene
- 5: Abschlußkappe
- 5a: Strinseite von 5
- 6: senkrechte Richtung zum Rolldach
- 7: Scharnierlinie
- 8: Haut
- 8a: Formteil
- 8b: Einbuchtung
- 9: Rolle
- 10: Wasserrinne

## Patentansprüche

1. Rolldach eines Fahrzeuges, insbesondere eines Personenkraftwagens, mit mehreren quer zur Fahrzeuglängsachse (1a) ausgerichteten, mit ihren freien Enden in Schienen (4) geführten Lamellen (2), die um eine sich in Lamellen-Längsrichtung erstreckende Scharnierlinie (7) gegeneinander verschwenkbar sind, um das Rolldach ausgehend von einer Position, in der es eine vom Dachrahmen des Fahrzeuges begrenzte Fahrzeug-Dachöffnung abdeckt, durch Aufrollen der Lamellen (2) auf eine bezüglich der Dachöffnung in Richtung der Fahrzeuglängsachse (1a) endseitig vorgesehene Rolle (9) in eine die Fahrzeug-Dachöffnung zumindest teilweise freigebende Position bringen zu können, dadurch gekennzeichnet, daß die Lamellen (2) endseitig mit Abschlußkappen (S) versehen und über diese in den mit dem Dachrahmen verbundenen, in Richtung der Fahrzeuglängsachse (1a) verlaufenden Schienen (4) geführt sind, während sie im zwischen den Abschlußkappen (5) liegenden Abschnitt (2a) durch elastisch verformbare Verbindungselemente (3) miteinander verbunden sind.

2. Fahrzeug-Rolldach nach Anspruch 1,
dadurch gekennzeichnet, daß die Verbindungselemente (3) zumindest berzüglich einer Mehrzahl der Lamellen (2) durch eine diese oberflächenseitig abdeckende und mit diesen verbundene Haut (8) gebildet sind.

3. Fahrzeug-Rolldach nach Anspruch 2,
dadurch gekennzeichnet, daß auf die bezüglich des Fahrzeugdaches innere und äußere Oberfläche der Lamellen (2) jeweils eine Haut (8) aufgebracht ist, wobei die beiden Häute (8) im Bereich der Verbindungselemente (3) miteinander verbunden sind.

4. Fahrzeug-Rolldach nach Anspruch 1,
dadurch gekennzeichnet, daß die Lamellen (2) zweiteilig ausgebildet und durch eine zwischen dem bezüglich des Fahrzeugdaches äußeren Lamellenteil (2') und dem bezüglich des Fahrzeugdaches inneren Lamellenteil (2'') vorgesehene, zumindest die Mehrzahl der Lamellen (2) erfassende Haut (8) miteinander verbunden sind, wobei der zwischen zwei benachbarten Lamellen (2) liegende Hautabschnitt das Verbindungselement (3) bildet.

5. Fahrzeug-Rolldach nach einem der vorangegangenen Ansprüche,
dadurch gekennzeichnet, daß die Haut (8) zumindest im nicht aufgerollten Zustand des Rolldaches in den Raum zwischen einander benachbarten Lamellen (2) hineinragt.

6. Fahrzeug-Rolldach nach einem der vorangegangenen Ansprüche,
dadurch gekennzeichnet, daß die Haut (8) als elastisch verformbares Formteil (8a) ausgebildet ist, dessen die Verbindungselemente (3) bildenden Abschnitte eine scharnierartige Einbuchtung (8b) aufweisen.

7. Fahrzeug-Rolldach nach einem der vorangegangenen Ansprüche,
dadurch gekennzeichnet, daß die Lamellen (2) formschlüssig mit der Haut (8) verbunden sind.

8. Fahrzeug-Rolldach nach Anspruch 1,
dadurch gekennzeichnet, daß die Verbindungselemente (3) als Formteile ausgebildet sind, die formschlüssig mit den benachbarten Lamellen (2) verbunden sind.

9. Fahrzeug-Rolldach nach Anspruch 8,
dadurch gekennzeichnet, daß die formschlüssige Verbindung zwischen Lamelle (2) und Formteil/Verbindungselement (3) zumindest geringfügig gelenkig ausgebildet ist.

10. Fahrzeug-Rolldach nach einem der vorangegangenen Ansprüche,
dadurch gekennzeichnet, daß die Abschlußkappen (5) derart geformt sind, daß sie unter Druckbelastung zwischen einander benachbarten Lamellen (2) als Gelenke wirken.

11. Fahrzeug-Rolldach nach Anspruch 10,
dadurch gekennzeichnet, daß die einander zugewandten Stirnseiten (5a) der Abschlußkappen (5) zweier benachbarter Lamellen (2) im wesentlichen halbkreisförmig konkav bzw. konvex geformt sind und unter Druckbelastung aneinander anliegen.

12. Fahrzeug-Rolldach nach einem der vorangegangenen Ansprüche,
dadurch gekennzeichnet, daß die Abschlußkappen (5) in senkrechter Richtung (6) zum Rolldach betrachtet höher sind als der zwischen den Abschlußkappen (5) liegende Abschnitt (2a) einer Lamelle (2) inklusive des zugehörigen Verbindungselementes (3).

13. Fahrzeug-Rolldach nach einem der vorangegangenen Ansprüche,
dadurch gekennzeichnet, daß zumindest die bei abgedeckter Dachöffnung am weitesten von der Rolle entfernte Lamelle (2) in sich starr ausgebildet ist und quer zur Fahrzeuglängsachse (1a) gekrümmt verläuft, wobei die Krümmung an diejenige des Dachrahmens in diesem Bereich angepaßt ist.

14. Fahrzeug-Rolldach nach einem der vorangegangenen Ansprüche,
dadurch gekennzeichnet, daß die Mehrzahl der Lamellen (2) elastisch verformbar sind und ohne zusätzliche Krafteinwirkung quer zur Fahrzeuglängsachse (1a) im wesentlichen geradlinig gestreckt verlaufen, durch zusätzliche Krafteinwirkung einer Spannvorrichtiung jedoch angepaßt an die Wölbung des Fahrzeugdaches krümmbar sind.

15. Fahrzeug-Rolldach nach einem der vorangegangenen Ansprüche,
dadurch gekennzeichnet, daß an der Stirnseite der bei abgedeckter Dachöffnung am weitesten von der Rolle entfernten Lamelle (2) eine sich quer zur Fahrzeuglängsachse (1a) erstreckende Wasserrinne (10) vorgesehen ist.
